# EUROPÄISCHE PATENTSCHRIFT

(11) **EP 0 635 395 B1**
(45) Veröffentlichungstag und Bekanntmachung des Hinweises auf die Patenterteilung: **27.08.1997**
(21) Anmeldenummer: 94107974.1
(22) Anmeldetag: 25.05.1994
(51) Int. Cl.: B60R 1/12

(54) **Informationseinrichtung in einem Kraftfahrzeug**
Information unit in a motor vehicle
Dispositif d'information dans un véhicule à moteur

(30) Priorität: 09.07.1993 DE 4322937
(43) Veröffentlichungstag der Anmeldung: 25.01.1995
(73) Patentinhaber: Donnelly Hohe GmbH & Co. KG, 97903 Collenberg (DE)
(72) Erfinder: Kaspar, Rudolf, D-97903 Collenberg (DE); Fürst, Peter, D-63927 Bürgstadt (DE)
(74) Vertreter: Zinngrebe, Horst, Dr.rer.nat.

(56) Entgegenhaltungen:
- EP-A- 0 254 435
- WO-A-82/02448
- DE-U- 7 708 610
- FR-A- 1 571 768
- US-A- 4 630 904
- US-A- 4 701 022
- US-A- 5 223 814
- PATENT ABSTRACTS OF JAPAN vol. 10, no. 246 (M-510) (2302) 23. August 1986 & JP-A-61 075 033 (SEIKO EPSON CORP.) 17. April 1986
- PATENT ABSTRACTS OF JAPAN vol. 5, no. 166 (M-93) (838) 23. Oktober 1981 & JP-A-56 090 743 (DAINI SEIKOSHA K.K.)

## Beschreibung

Die Erfindung betrifft eine Informationseinrichtung nach dem Oberbegriff des Anpruches 1.

Generell stellt es ein Problem dar, den Fahrer eine Kraftfahrzeugs mit Informationen über den Betriebszustand des Fahrzeugs sowie über die außerhalb und innerhalb des Fahrzeugs bestehenden Konditionen zu unterrichten, ohne durch übermäßige Ablenkung seiner Aufmerksamkeit die Fahrsicherheit zu gefährden. Die Anbringung entsprechender Anzeigen und Bedienungsknöpfe am Armaturenbrett oder der -konsole trägt wegen der Anzeigenfülle zur Verwirrung des Fahrers wegen fehlender Übersichtlichkeit bei und lenkt seinen Blick relativ weit vom Fahrgeschehen ab.

Eine Informationseinrichtung nach dem ersten Teil des Anspruches 1 ist in dem Dokument WO 82/02448 beschrieben und umfaßt einen in dem Speigelgehäuse eines Kfz-Innenspiegels angeordnete Mikroprozessor, der mit mehreren Sensoren, die etwa die Geschwindigkeit des Fahrzeugs, den Kraftstoffvorrat und andere Kenndaten des Fahrzeugs erfassen, verbunden ist. In das Spiegelglas sind mehrere vom Mikroprozessor angeteuerte Anzeigen integriert, die dem Fahrer den Zustand der für den Fahrbetrieb wichtigen Parameter anzeigen.

Der Erfindung liegt die Aufgabe zugrunde, die bekannte Informationseinrichtung weiter zu verbessern.

Dazu ist bei der Informationseinrichtung gemäß Oberbegriff des Anspruches 1 vorgesehen, daß in den Innenspiegel ein Mikrofon eingebaut ist, welches an den Bordcomputer des Fahrzeugs angeschlossen ist und als Freisprecheinrichtung für ein Bordtelefon dient. Die Erfindung erhöht die Fahrsicherheit, weil der Fahrer beim telefonieren die Hände nicht mehr vom Steuer nehmen muß. Vorteilhafterweise befindet sich im Inneren des Gehäuses eine UKW-Antenne zweckmäßig in Form eines langgestreckten elektrischen Leiters, die mit der Schaltung elektrisch verbunden ist.

Bevorzugte Ausgestaltungen der Erfindung sind in den Unteransprüchen angegeben.

Die Erfindung wird nachstehend anhand des in der beigefügten Zeichnung dargestellten Ausführungsbeispiels im einzelnen beschrieben. Es zeigen:

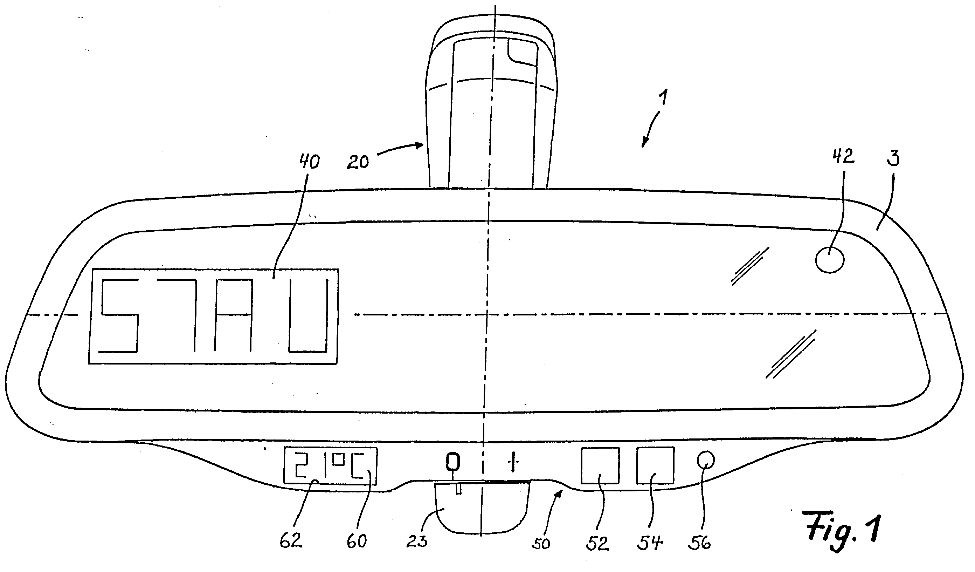

- Fig. 1: eine Ansicht eines mit den Merkmalen der Erfindung ausgerüsteten Fahrzeuginnenspiegels;

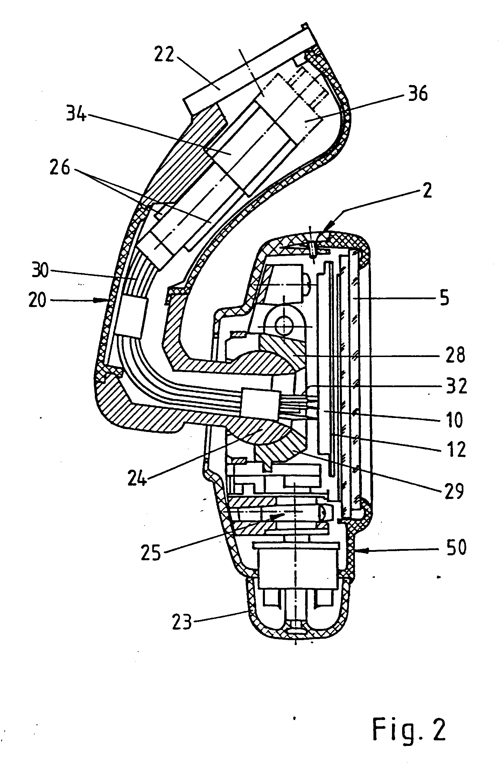

- Fig. 2: einen Vertikalschnitt durch einen hohlen Tragarm und durch das Spiegelgehäuse des Innenspiegels nach Fig. 1;
- Fig. 3: ein elektrisches Blockschaltbild der Informationseinrichtung im Innenspiegel; und
- Fig. 4 und 5: schematische Darstellung der Ansteuerungen von Anzeigesegmenten im Spiegelglas des Innenspiegels.

Der Innenspiegel 1, der besonders für einen Personenkraftwagen oder für ein Nutzfahrzeug geeignet ist, besitzt einen L-förmigen Tragarm 20, dessen oberes, relativ ebenes Ende mit dem spiegelseitigen Teil einer Befestigungsvorrichtung 22 etwa gemäß deutscher Offenlegungsschrift 29 47 512 versehen ist, und dessen unteres Ende 24 ballig ausgeformt ist. Durch den hohlen Tragarm 20 erstreckt sich ein aus mehreren Adern bestehendes elektrisches Kabel 30, dessen spiegelseitiges Ende 32 an eine elektrische Schaltung 10 angeschlossen ist. Nahe der Befestigungsvorrichtung 22 ist das Kabel 30 in eine Steckbuchse 34 geführt, deren Schaft von einer am Tragarm 20 befestigten Klammer 26 gehalten ist. In die Buchse 34 kann ein strichpunktiert angedeutetes Steckerteil 36 eingeführt werden, welches mit einem nicht dargestellten, sich durch die Vorrichtung 22 hindurch erstreckenden Kabel eines Bordnetzes des Fahrzeugs verbunden ist.

Auf das ballige Ende 24 des Tragarms 20 ist ein Spiegelgehäuse 2 mittels in ihm befestigter Kalotten 28, 29 in bekannter Weise per Hand verstellbar aufgeklemmt. Der dem balligen Ende 24 benachbarte Teil des Tragarms 20 erstreckt sich durch eine rückwärtige Öffnung des Gehäuses 2, so daß das ballige Ende 24 sich innerhalb des Spiegelgehäuses 2 befindet. Unterhalb der Kalotten 28, 29 ist in dem Spiegelgehäuse ein im ganzen mit 25 bezeichneter Verstellmechanismus beherbergt, der etwa gemäß deutscher Gebrauchsmusterschrift 91 01 986 ausgeführt ist und ein aus dem Spiegelgehäuse 2 nach unten vorstehendes Betätigungsorgan 23 in Form eines Drehknopfes aufweist. Das Spiegelgehäuse 2 trägt ein Spiegelglas 5, welches durch eine vordere Öffnung des Spiegelgehäuses 2 in bekannter Weise einsehbar ist. Das Spiegelglas weist zwei gleich große Glasplatten auf, zwischen denen eine elektrochrome Substanz eingefangen ist. In der elektrischen Schaltung 10 ist eine elektronische Ansteuerschaltung 70 vorgesehen, welche unter Steuerung eines zentralen Prozessors 74 über ein Leiterpaar 72 an die elektochrome Substanz eine den Lichtverhältnissen entsprechende Spannung anlegt, um das Spiegelglas für das einfallende Licht stark oder schwach reflektierend zu machen. Der zentrale Prozessor 74 ist ebenfalls Bestandteil der elektrischen Schaltung 10.

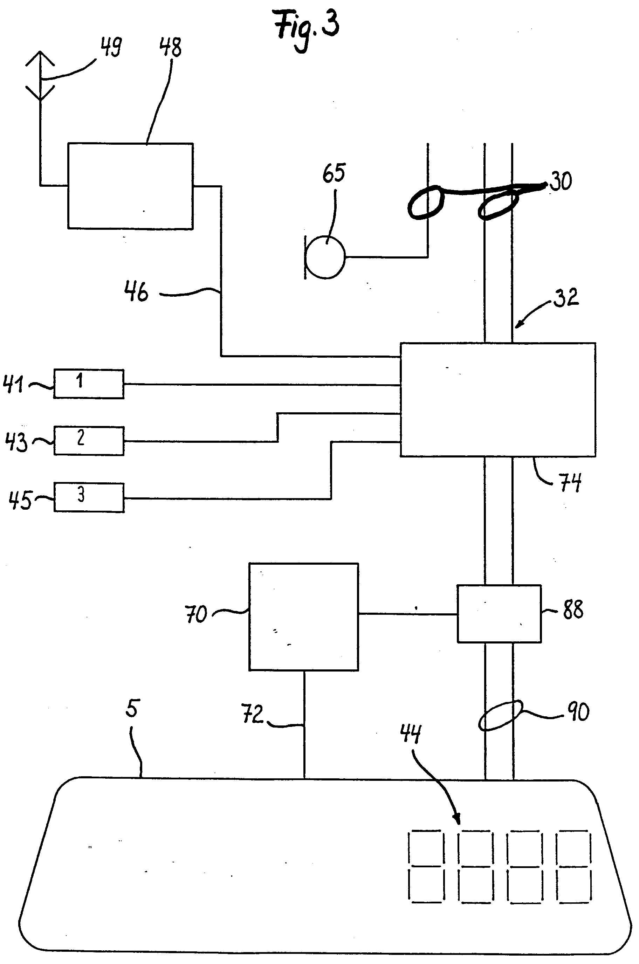

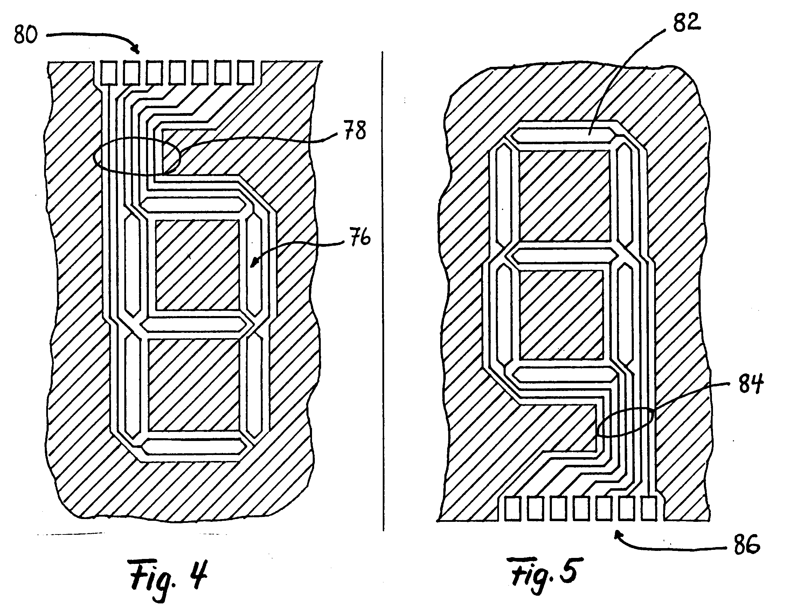

In die elektrochrome Substanz sind isoliert aus jeweils 7 Segmenten aufbaubare Ziffern oder Buchstaben eingebettet, die in Fig. 3 schematisch mit 8888 angegeben sind. Die vorderen sieben Segmentelektroden 76 für eine Ziffer oder Buchstaben sind gemäß Fig. 4 einzeln über separate elektrische Leiterbahnen 78 an sieben Kontaktstellen 80 am Rande des Spiegelglases 5 angeschlossen. Die sieben hinteren Segmentelektroden 82 für das Zeichen sind gemäß Fig. 5 über getrennte Leiterbahnen 84 an eine Kontaktleiste 86 angeschlossen, die zur Unterseite des Spiegelglases 5 herausgeführt sind. Ein vom zentralen Prozessor 74 gesteuerter Segmenttreiber 88 ist über Ausgangsleitungen 90 an die Kontaktleisten 80 und 86 angeschlossen um durch deren Beaufschlagung mit geeigneten Spannungen eine gewünschte Ziffern- oder Buchstabenfolge im Spiegelglas 5 erscheinen zu lassen. Die Gesamtzahl der im vorliegenden Beispiel 4 gewählten Buchstaben oder Ziffern bilden ein Anzeigenfeld 44, welches in das Spiegelglas 5 integriert ist und unabhängig von dem eingestellten Reflexionsvermögen des Spiegelglases 5 mit elektrochromer Substanz eine gewünschte Anzeige (etwa STAU) oder Temperaturen oder sonstige Zahlenangaben unter Steuerung des zentralen Computers 74 über den Segmenttreiber 88 ermöglicht. Der zentrale Prozessor 74 nimmt dazu Eingangssignale parallel aus mehreren Sensoren 41, 42, 43 sowie über eine Leitung 46 aus einer Empfangseinheit 48 auf, welche eine Signalverstärker und -formereinheit für aus einer Antenne 49 aufgenommene elektrische Signale sein kann. Die Antenne 49 ist eine Ukw-Empfangsantenne, die hinter der Schaltung 10 über die Breite des Gehäuses 2 als Leiterdraht ausgespannt und mit der Schaltung 10 verbunden ist. Der zentrale Prozessor 74 ist schließlich mit dem Ende 32 des Kabels 30 verbunden. Das elektrochrome Material weist ferner einen kleineren, runden Ausschnitt 42 auf, hinter welchem ein nicht dargestelltes lichtempfindliches Element als Sensor 41 gehalten ist. Der Sensor 41 ist mit dem Prozessor 74 der Schaltung 10 elektrisch verbunden. Der Ausschnitt 42 für den Sensor 41 kann in einer rechten oberen Ecke des Spiegelglases vorgesehen sein. Die die Schaltung 10 tragende Platine 12 ist hinter dem Spiegelglas 5 und parallel zu diesem in nicht dargestellter Weise in dem Spiegelgehäuse 2 gehalten.

An das Spiegelgehäuse 2 ist längs seines unteren Randes eine Leiste 50 angeformt, aus welcher der etwa gemäß deutscher Gebrauchsmusterschrift 91 04 319 ausgebildete Drehknopf 23 vorsteht. Die Leiste 50 weist auf ihrer Vorderseite einen Ausschnitt 62 auf, der sich etwa unterhalb der Anzeigevorrichtung 40 befindet und hinter welchem eine weitere Anzeigevorrichtung 60 in Form einer Flüssigkristallzelle gehalten ist. Die Flüssigkristallzelle 60 ist elektrisch mit der Schaltung 10 verbunden. Ferner weist die Leiste 50 mehrere weitere Ausschnitte auf, in welchen Bedienungsorgane, hier zwei Betätigungstasten 52, 54 befestigt sind, welche wiederum mit der Schaltung 10 elektrisch verbunden sind. Die Bedienungstasten 52, 54 befinden sich zweckmäßig in Griffnähe zum Drehknopf 23 auf der Vorderseite der Leiste 50. Schließlich weist die Leiste 50 noch eine kleine runde Öffnung für einen weiteren Sensor 43 auf. Auch der Sensor 43 ist elektrisch mit der Schaltung 10 verbunden.

Es liegt im Rahmen der Erfindung, weitere Betätigungsorgane und/oder Sensoren 45 an der Leiste 50 vorzusehen. Auch ist es möglich, einen oder mehrere Sensoren in dem Rand 3 des Spiegelgehäuses 2 unterzubringen. Ferner kann im Spiegelgehäuse 2 selbst oder in der Leiste 50 ein Summer als elektroakustischer Signalgeber angeordnet sein.

Die vorstehende Einrichtung kann zu folgenden Aufgaben herangezogen werden.
1. Datenempfang Unfallereignis:
   Eine weitere Erhöhung der Unfallsicherheit stellt der Empfang von Warnsignalen über die UKW-Empfangsantenne 49 im Innenspiegel aus einem Unfallfahrzeug dar. Bei einer automatischen Auslösung der in die Schaltung 10 integrierten Empfangseinheit 48 wird das auf das Unfallfahrzeug zukommende Fahrzeug rechtzeitig gewarnt.
2. Datenempfang:
   Im Rahmen des Verkehrsleitsystems werden von an der Fahrbahn befindlichen Sendern Fahrerinformationen (zum Beispiel Stauwarnung) abgestrahlt. Diese Information wird von der Schaltung 10 über die Empfangsantenne 49 aufgenommen und in der Anzeigeeinrichtung 40 oder 44 als STAU für den Fahrer zur Anzeige gebracht. Auch ungünstige Wetterverhältnisse können auf die genannte Weise dem Fahrer über die Anzeigeeinheiten 40 oder 44 zur Kenntnis gebracht werden. Je nach dem von den an der Fahrbahn befindlichen Sendern benutzten Übertragungsmedium kann ein Infrarotempfänger etwa gemäß deutscher Gebrauchsmusterschrift 91 04 319 oder ein Ukw-Empfänger vorgesehen sein.
3.
   In dem Innenspiegel 1 kann ein Mikrophon 65 etwa an der Leiste 50 eingebaut sein, das die menschliche Sprache des Fahrers erfaßt und über das Kabel 30 und den Bordcomputer des Fahrzeugs Fahrzeugfunktionen auslösen kann. Ferner kann das Mikrophon als Freisprecheinrichtung für ein etwa vorhandenes Bordtelefon dienen.
4.
   Die Anzeigeeinheit 40 kann aus EC-Segmenten oder aus LC-Segmenten bestehen, die in ein elektrochromes Spiegelglas 5 wie beschrieben integriert sind. Alternativ können in einem als Keilglas ausgebildeten Spiegelglas 5 LC-Segmente integriert sein. Ferner kann für Nachtfahrten eine Hintergrundbeleuchtung vorgesehen werden.
5.
   Die Sensoren 41, 43, 45 können die Innentemperatur im Fahrzeug, die Luftfeuchte im Fahrzeug, den Luftdruck, den Schadstoffgehalt im Innenraum des Fahrzeugs sowie die Beleuchtungsstärke außerhalb des Fahrzeugs erfassen, um im letzteren Fall ein automatisches Einschalten des Frontlichts am Fahrzeug auszulösen. Da die Schaltung 10 über das Kabel 30 mit dem Bordnetz und damit dem im Fahrzeug vorgesehenen Rechner unmittelbar elektrisch verbunden ist, können von diesem dem Fahrer über die Anzeigevorrichtung 40 oder 44 erforderliche Informationen direkt mitgeteilt werden.

## Patentansprüche

1. Informationseinrichtung in einem Kraftfahrzeug, die eine an ein Bordnetz des Kraftfahrzeugs anschließbare elektronische Schaltung (10) sowie einen oder mehrere Sensoren (41, 43, 45), eine Anzeigevorrichtung und gegebenenfalls Bedienungselemente (52, 54) umfaßt, wobei der Sensor und die Schaltung (10) im Gehäuse (2) eines Kraftfahrzeug-Innenspiegels (1) untergebracht sind, die Schaltung (10) mit einem durch einen hohlen Tragarm (20) des Innenspiegels (1) geführtes und an das Bordnetz anschließbares Kabel (30) verbunden ist und in das Spiegelglas (5) des Innenspiegels (1) die Anzeigevorrichtung (40) integriert ist, dadurch gekennzeichnet, daß in den Innenspiegel ein Mikrofon (65) eingebaut ist, welches an den Bordcomputer des Fahrzeugs angeschlossen ist und als Freisprecheinrichtung für ein Bordtelefon dient.

2. Einrichtung nach Anspruch 1, dadurch gekennzeichnet, daß im Inneren des Gehäuses (2) eine UKW-Antenne zweckmäßig in Form eines langgestreckten elektrischen Leiters vorgesehen und mit der Schaltung (10) elektrisch verbunden ist.

## Claims

1. Information unit in a motor vehicle comprising an electronic switch circuit (10) connectable to the supply system on board of the motor vehicle as well as one or several detectors (41, 43, 45), a display and as the case may be operating elements (52, 54), the detector and the switch circuit (10) being lodged in a casing (2) of the inside mirror of a motor vehicle (1), the switch circuit being conducted through the hollow supporting lug (20) of the inside mirror (1) and connected with the cable connectable to the supply system on board, the display (40) being integrated into the mirror glass (5) of the inside mirror (1), characterized in that a microphone (65) is mounted in the inside mirror, which microphone is connected to the computer on board of the vehicle and serves as handsfree device for the telephone on board.

2. Unit according to claim 1, characterized in that in the inside of the casing (2) a VHF antenna is provided for which has advisably the shape of a long electric conductor and is electrically connected to a switch circuit (10).

## Revendications

1. Dispositif d'information dans un véhicule à moteur, comprenant un circuit électronique (10) pouvant être raccordé au réseau de bord du véhicule, de même qu'un ou plusieurs détecteurs (41, 43, 45), un dispositif d'affichage et le cas échéant des éléments de commande (52, 54), le détecteur et le circuit (10) étant logés dans le boîtier (2) d'un rétroviseur intérieur de véhicule, le circuit (10) étant relié par un câble (30) contenu dans une branche (20) creuse du rétroviseur intérieur (1) pouvant être raccordé au réseau de bord et le miroir intérieur du rétroviseur intérieur (1) étant intégré au dispositif d'affichage (40), caractérisé en ce qu'un microphone (65) est monté dans le rétroviseur intérieur qui est raccordé à l'ordinateur de bord du véhicule et sert d'installation de dispositif mains libres pour le téléphone de bord.

2. Dispositif selon la revendication 1, caractérisé en ce que, à l'intérieur du boîtier (2), une antenne à ondes ultracourtes (UKW) est prévue, ayant, de manière appropriée, la forme allongée d'un conducteur électrique et étant reliée au circuit électrique (10).
